(19) Europäisches Patentamt
European Patent Office
Office européen des brevets

(11) Veröffentlichungsnummer: **0 534 293 A2**

(12) **EUROPÄISCHE PATENTANMELDUNG**

(21) Anmeldenummer: **92115798.8**

(22) Anmeldetag: **16.09.92**

(51) Int. Cl.[5]: **C08L 69/00**, C08K 5/52, //(C08L69/00,51:04,25:02,27:18)

(30) Priorität: **27.09.91 DE 4132172**

(43) Veröffentlichungstag der Anmeldung: **31.03.93 Patentblatt 93/13**

(84) Benannte Vertragsstaaten: **BE DE ES FR GB IT NL**

(71) Anmelder: **BASF Aktiengesellschaft**
**Carl-Bosch-Strasse 38**
**W-6700 Ludwigshafen(DE)**

(72) Erfinder: **Niessner, Norbert, Dr.**
**Buhl'scher Hof 10**
**W-6701 Friedelsheim(DE)**
Erfinder: **Neumann, Rainer, Dr.**
**Im Palmengarten 9**
**W-6704 Mutterstadt(DE)**
Erfinder: **Ruppmich, Karl**
**Koenigsbacher Strasse 134**
**W-6700 Ludwigshafen(DE)**
Erfinder: **Seitz, Friedrich, Dr.**
**Von-Wieser-Strasse 1**
**W-6701 Friedelsheim(DE)**
Erfinder: **Zeltner, Doris, Dr.**
**Viehtriftstrasse 94**
**W-6725 Roemerberg(DE)**

(54) **Flammwidrig ausgerüstete chlor- und bromfreie Formmasse.**

(57) Formmasse, enthaltend, bezogen auf die Summe von A bis E,

A: mindestens 40 Gew.-% mindestens eines halogenfreien Polycarbonats A

B: 5-40 Gew.-% mindestens eines halogenfreien Pfropfpolymerisats B, aufgebaut aus, bezogen auf B,

B1: 40-80 Gew.-% eines Elastomeren B1 mit einer Glastemperatur von unter 0 °C, aus, bezogen auf B1,

B11: mindestens 50 Gew.-% eines Diens oder mindestens 4 C-Atome im Alkoholteil aufweisenden Acrylesters (B11)

B12: 1-40 Gew.-% einer halogenfreien Phosphorverbindung B12 der nachstehenden allgemeinen Formel (I)

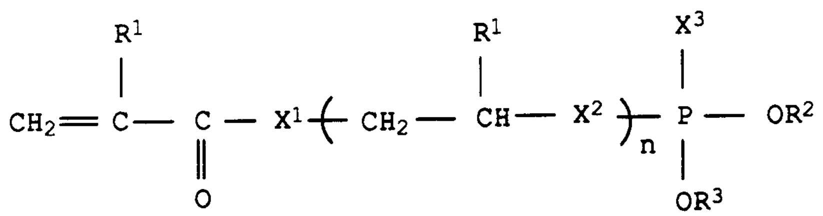
(I)

in der bedeutet:

$R^1$ = H oder $CH_3$

$R^2$, $R^3$ = jeweils unabhängig halogenfreies $C_1$-$C_8$-Alkyl oder halogenfreies, ggf. halogenfrei substituiertes $C_6$-$C_{20}$-Aryl

$X^1$, $X^2$, $X^3$ = O, S, NR (wobei R Wasserstoff oder halogenfreies $C_1$-$C_8$-Alkyl bedeutet) und

n = 0 bis 10,

B13: gegebenenfalls bis zu 5 Gew.-% eines vernetzenden weiteren Monomeren

EP 0 534 293 A2

B2: 20-60 Gew.-% einer Pfropfhülle B2 aus, bezogen auf B2,

B21: 40-98 Gew.-% Styrol, α -Alkylstyrol, kernsubstituiertem Styrol und/oder $C_1$-$C_8$-Alkyl(meth)-acrylat,

B22: 2-60 Gew.-% (Meth)acrylnitril und/oder Maleinsäureanhydrid, sowie

C: 5-40 Gew.-% eines halogenfreien thermoplastischen Copolymerisats C aus, bezogen auf C,

C1: 50 bis 95 Gew.-% Styrol, α-Alkylstyrol, kernsubstituiertem Styrol und/oder $C_1$-$C_8$-(Meth)acrylate (C1),

C2: 5 bis 50 Gew.-% (Meth)acrylnitril und/oder Maleinsäureanhydrid (C2),

D: 1 bis 50 Gew.-% einer halogenfreien Phosphorverbindung D der Formel (II)

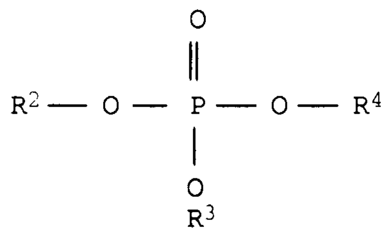

(II)

in der $R^2$, $R^3$, $R^4$ jeweils unabhängig die obenstehende Bedeutung von $R^2$ und $R^3$ haben,

E: bis 5 Gew.-% eines Tetrafluorethylen-Polymerisats mit einer mittleren Teilchengröße von 50 bis 2000 nm.

Die Erfindung betrifft eine chlor- und bromfreie flammwidrig ausgerüstete Formmasse. Chlor- und bromfreie Formmassen auf der Grundlage von ABS oder ASA-Mischungen mit PC (Polycarbonat) sind z.B. bekannt aus den folgenden Druckschriften:

(1) DE-A 35 23 314
(2) DE-A 35 23 316
(3) DE-A 38 19 081
(4) DE-A 38 24 356
(5) DE-A 36 28 904
(6) EP-A 287 895
(7) EP-A 286 965

Zur Flammschutzausrüstung werden neben organischen Phosphorsäureestern noch faserbildende PTFE-Polymere eingesetzt. Mischungen dieser Art haben zwar gute flammhemmende Wirkung, zeigen jedoch Nachteile in der Kerbschlagzähigkeit. Außerdem führt die zu einer Einstufung nach UL 94 notwendige Menge an organischen Phosphorverbindungen zu einer drastischen Erniedrigung der Wärmeformbeständigkeit. In (4) werden deshalb spezielle Phosphorsäureester vorgeschlagen, die eine erhöhte Vicat-Temperatur trotz guter flammhemmender Wirkung gewährleisten: Diese speziellen Phosphate sind allerdings kommerziell nicht erhältlich und nur aufwendig herzustellen. Außerdem haben Mischungen mit diesen Phosphaten nur eine unzureichende Kerbschlagzähigkeit.

Phosphate mit vinylischer Doppelbindung sind im Handel erhältlich und können nach Herstellerangaben als Flammschutzmittel eingesetzt werden. Über ihre Wirkung in PC/ABS bzw. PC/ASA-Blends ist allerdings nichts bekannt. Üblicherweise wird von den als Flammschutzmitteln eingesetzten Phosphaten eine gewisse Flüchtigkeit verlangt, da ansonsten die flammhemmenden Eigenschaften nicht auftreten.

Es wurde nun gefunden, daß chlor- und bromfreie Formmassen auf der Grundlage von Mischungen aus ABS oder ASA mit Polycarbonat (PC) ein besonders günstiges flammwidriges Verhalten aufweisen, wenn sie ein halogenfreies Pfropfcopolymerisat enthalten, dessen Pfropfkern (Elastomer) neben den üblichen Monomeren (entweder einem Dien wie Butadien oder Isopren oder einem mindestens 4 C-Atome im Alkoholteil aufweisenden Acrylester) ein radikalisch (co)polymerisierbares vinylsubstituiertes Phosphat enthält.

Unmittelbarer Erfindungsgegenstand ist daher eine flammwidrig ausgerüstete chlor- und bromfreie Formmasse mit hoher Wärmeformbeständigkeit und guter Kerbschlagzähigkeit, die enthält, bezogen auf die Summe von A bis E

A: mindestens 40 Gew.-% mindestens eines halogenfreien Polycarbonats A

B: 5-40 Gew.-% mindestens eines halogenfreien Pfropfpolymerisats B, aufgebaut aus, bezogen auf B,

B1: 40-80 Gew.-% eines Elastomeren B1 mit einer Glastemperatur von unter 0 °C, aus, bezogen auf B1,

B11: mindestens 50 Gew.-% eines Diens oder mindestens 4 C-Atome im Alkoholteil aufweisenden Acrylesters (B11)

B12: 1-40 Gew.-% einer halogenfreien Phosphorverbindung B12 der nachstehenden allgemeinen Formel (I)

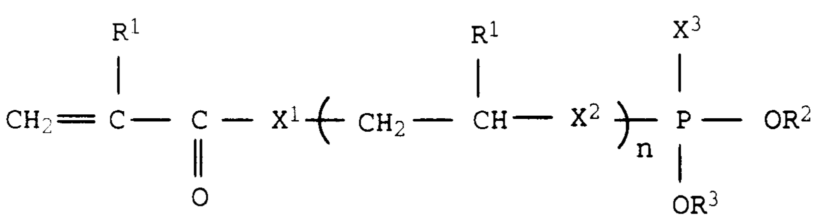

(I)

in der bedeutet:

$R^1$ = H oder $CH_3$

$R^2$, $R^3$ = jeweils unabhängig halogenfreies $C_1$-$C_8$-Alkyl oder halogenfreies, ggf. halogenfrei substituiertes $C_6$-$C_{20}$-Aryl

$X^1$, $X^2$, $X^3$ = O, S, NR (wobei R Wasserstoff oder halogenfreies $C_1$-$C_8$-Alkyl bedeutet) und

n = 0 bis 10,

B13: gegebenenfalls bis zu 5 Gew.-% eines vernetzenden weiteren Monomeren

B2: 20-60 Gew.-% einer Pfropfhülle B2 aus, bezogen auf B2

B21: 40-98 Gew.-% Styrol, α -Alkylstyrol, kernsubstituiertem Styrol und/oder $C_1$-$C_8$-Alkyl(meth)-acrylat,

B22: 2-60 Gew.-% (Meth)acrylnitril und/oder Maleinsäureanhydrid, sowie

C: 5-40 Gew.-% eines halogenfreien thermoplastischen Copolymerisats C aus, bezogen auf C,

C1: 50 bis 95 Gew.-% Styrol, eines α-Alkylstyrols, kernsubstituierten Styrols und/oder $C_1$-$C_8$-Alkyl(meth)acrylats (C1),

C2: 5 bis 50 Gew.-% (Meth)acrylnitril, $C_1$-$C_8$-Alkyl(meth)acrylat und/oder Maleinsäureanhydrid (C2),

D: 1 bis 50 Gew.-% einer halogenfreien Phosphorverbindung D der Formel (II)

(II) 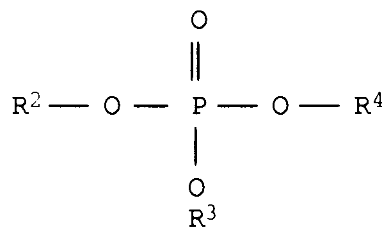

in der $R^2$, $R^3$, $R^4$ jeweils unabhängig die obenstehende Bedeutung von $R^2$ und $R^3$ haben,

E: bis 5 Gew.-% eines Tetrafluorethylen-Polymerisats mit einer mittleren Teilchengröße von 50 bis 2000 nm.

Überraschend war, daß Phosphate der allgemeinen Formel (I), wenn sie in die Pfropfgrundlage des Pfropfpolymerisats einpolymerisiert sind, der Mischung eine gute flammhemmende Wirkung verleihen und außerdem die Mischungen hohe Kerbschlagzähigkeit aufweisen. Weiter zeichnen sich die Mischungen durch eine ausgezeichnete Wärmeformbeständigkeit und durch eine geringere Tendenz zum "Ausbluten" des niedermolekularen organischen Phosphats aus.

Die Formmasse enthält bevorzugt folgende Anteile der Komponenten, jeweils bezogen auf die Summe der Komponenten A + B + C + D + E:

A: 50 bis 85 Gew.-%, insbesondere 60 bis 70 Gew.-%

B: 5 bis 25 Gew.-%, insbesondere 6 bis 15 Gew.-%

C: 5 bis 25 Gew.-%, insbesondere 10 bis 25 Gew.-%

D: 2 bis 15 Gew.-%, insbesondere 5 bis 15 Gew.-%

E: 0,01 bis 2 Gew.-%, insbesondere 0,1 bis 1 Gew.-%

Bezogen auf 100 Gewichtsteile der erfindungsgemäßen Formmasse aus A bis E können z.B. bis zu 50 (insbesondere 20) Gewichtsteile übliche Zusatzstoffe F zugegen sein.

Erfindungsgemäß geeignete, thermoplastische halogenfreie aromatische Polycarbonate A sind solche auf Basis der Diphenole der Formel (II)

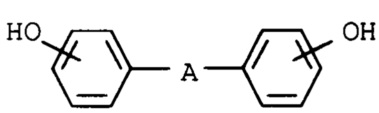 (II)

worin A eine Einfachbindung, eine $C_1$-$C_3$-Alkylen, $C_2$-$C_3$-Alkyliden, ein $C_3$-$C_6$-Cycloalkyliden, -S- oder -$SO_2$- sind.

Erfindungsgemäß geeignete Polycarbonate gemäß Komponente A sind sowohl Homopolycarbonate als auch Copolycarbonate.

Die Diphenole der Formel (II) sind i.a. bekannt oder können nach bekannten Verfahren hergestellt werden.

Die Herstellung erfindungsgemäß geeigneter Polycarbonate A ist ebenfalls bekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird (bezüglich polydiorganosiloxanhaltigen Polycarbonaten siehe beispielsweise DE-OS 33 34 782).

Geeignete Kettenabbrecher sind beispielsweise Phenol, p-tert.-Butylphenol aber auch langkettige Alkylphenole wie 4-(1,1,3,3-Tetramethylbutyl)-phenol (vgl. DE-OS 28 42 005) oder Monoalkylphenole oder Dialkylphenole mit insgesamt 8 bis 20 C-Atomen in den Alkylsubstituenten (vgl. DE-OS 35 06 472), wie beispielsweise p-Nonylphenol, 3,5-ditert.-Butylphenol, p-tert.-Octylphenol, p-Dodecylphenol, 2-(3,5-dimethylheptyl)-phenyl und 4-(3,5-Dimethylheptyl)-phenol.

Erfindungsgemäß geeignete Polycarbonate A weisen relative Viskositäten $\eta_{rel}$ von 1,10 bis 1,50, insbesondere von 1,25 bis 1,40 auf. Dies entspricht einem mittleren Molekulargewicht ($\overline{M}_w$) von etwa 10 000 bis 200 000; bevorzugt ist ein Molekulargewicht $\overline{M}_w$ von 20 000 bis 80 000.

Geeignete Diphenole der Formel (II) sind beispielsweise Hydrochinon, Resorcin, 4,4'-Dihydroxy-biphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan.

Bevorzugte Diphenole der Formel (II) sind 2,2-Bis-(4-hydroxyphenyl)-propan (Bisphenol A) und 1,1-Bis-(4-hydroxyphenyl)-cyclohexan.

Geeignete Polycarbonate A können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolymerisat die Copolycarbonate von Bisphenol A.

Halogenfreie Polycarbonate A im Sinne der vorliegenden Erfindung bedeutet, daß die Polycarbonate aus halogenfreien Diphenolen, halogenfreien Kettenabbrechern und gegebenenfalls halogenfreien Verzweigen aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Die Pfropfpolymerisate B sind im Prinzip als ABS- oder ASA-Polymere bekannt und werden erfindungsgemäß durch Einbau von copolymerisierbaren Phosphorverbindungen in den Pfropfkern (B11) verändert.

Diese speziellen Pfropfmischpolymerisate B sind somit aufgebaut, jeweils bezogen auf B, aus 40 bis 80 Gew.-% einer Elastomerkomponente (Pfropfkern) B1, die ihrerseits aus den erfindungsgemäßen vorgenannten Bestandteilen bzw. Monomeren B11-B13 aufgebaut ist und 20 bis 60 Gew.-% einer Pfropfhülle B2.

Pfropfcopolymer B wird im Falle eines ASA vorzugsweise gebildet aus dem Pfropfkern B1 aus einem Elastomere bildenden Acrylester wie Butylacrylat oder 2-Ethylhexylacrylat in einer Menge von mindestens 50 Gew.-% (bezogen auf B1), 1 bis 40 Gew.-% der organischen Phosphorverbindung der allgemeinen Formel (I) und 0,1 bis 5 Gew.-%, wiederum bezogen auf B1, eines copolymerisierbaren polyfunktionellen, vernetzenden Monomeren. Aufbau und Herstellung von ASA-Polymeren sind prinzipiell in DE-OS 28 26 925, DE-OS 31 49 358 und DE-OS 34 14 118 beschrieben. Wenn die Erfindung zur Herstellung entsprechender ABS-Polymerer benutzt werden soll, besteht der Pfropfkern B1 dagegen aus - i.a. unvernetzten Dienpolymeren, d.h. Polymeren des Butadiens oder Isoprens, die durch Copolymerisation mit den copolymerisierbaren Phosphorverbindungen (I) modifiziert sind.

Auf diesem erfindungsgemäß modifizierten Pfropfkern B1 wird in an sich bekannter Weise eine Pfropfhülle B2 aufgebracht.

Diese Pfropfhülle ist in jedem Falle aufgebaut aus - jeweils bezogen auf B2 - 50 bis 95 Gew.-% Styrol, $\alpha$-Methylstyrol oder einem kernalkyliertem Styrol und/oder 50 bis 5 Gew.-% (Meth)acrylnitril, Methylmethacrylat oder Maleinsäureanhydrid.

Die Pfropfmischpolymerisation kann wie bekannt in Lösung, Suspension oder vorzugsweise in Emulsion erfolgen. Die Weichphase des Pfropfmischpolymerisats weist - bei der bevorzugten Herstellung des Kautschuks und der Pfropfung in Emulsion - einen mittleren Teilchendurchmesser ($d_{50}$-Wert der integralen Masseverteilung) von z.B. 50 bis 700 nm auf. Bei der Pfropfcopolymerisation findet bekanntlich eine zumindest teilweise chemische Verknüpfung der polymerisierenden Monomeren mit dem bereits polymerisierten Kautschuk statt, wobei die Verknüpfung wahrscheinlich an den im Kautschuk enthaltenden Doppelbindungen erfolgt. Hinsichtlich des Pfropfverhaltens unterscheidet sich die erfindungsgemäß modifizierte Pfropfgrundlage nicht von Bekannten.

Die Pfropfung kann auch mehrstufig erfolgen, indem zuerst ein Teil der die Pfropfhülle bildenden Monomere aufgepfropft wird und anschließend der Rest.

Der Kautschuk liegt in den Pfropfpolymerisaten B in Form wenigstens partiell vernetzter Teilchen einer mittleren Teilchengröße von 50 bis 700 nm vor ($d_{50}$-Wert der integrierten Masseverteilung). Da die ursprüngliche Teilchengröße geringer ist, werden die Teilchen des Kautschuks z.T. in bekannter Weise, z.B. durch Agglomeration vergrößert, so daß eine sog. bimodale Verteilung (50 bis 180 nm einerseits und 200

bis 700 nm andererseits) erhalten wird. Es kann aber auch durch das sog. Saatverfahren unmittelbar eine grobteilige Kautschukdispersion hergestellt werden.

Die Herstellung des Pfropfmischpolymerisats B kann beispielsweise nach der in der DE-PS 12 60 135 beschriebenen Methode erfolgen.

Im Falle eines zweistufigen Aufbaus der Pfropfhülle B2 macht die 1. Stufe 20 bis 70 Gew.-%, vorzugsweise 25 bis 50 Gew.-%, bezogen auf B2, aus. Zu ihrer Herstellung werden nur monoethylenisch-ungesättigte aromatische Kohlenwasserstoffe mit bis zu 12 C-Atomen (B21) verwendet. Die 2. Stufe der Pfropfhülle macht 30 bis 80 Gew.-%, insbesondere 50 bis 75 Gew.-%, jeweils bezogen auf B2), aus. Zu ihrer Herstellung werden Mischungen aus den genannten monoethylenisch ungesättigten aromatischen Kohlenwasserstoffen B21 und monoethylenisch ungesättigten Monomeren B22) im Gewichtsverhältnis B21 / B22 von 98:2 bis 40:60, insbesondere 90:10 bis 60:40 angewendet.

Als bevorzugte Monomeren-Gemische werden vor allem Styrol und Acrylnitril, $\alpha$-Methylstyrol und Acrylnitril, Styrol, Acrylnitril und Methylmethacrylat, Styrol und Maleinsäureanhydrid eingesetzt.

Die bei der Herstellung des Pfropfmischpolymerisats B) entstehenden, nicht gepfropften, d.h. chemisch dem Bestandteil C entsprechenden Anteile an Copolymerisaten aus den Pfropfmonomeren B21 und/oder B22 werden im Sinne der vorliegenden Erfindung der Komponente B zugerechnet.

Die Bedingungen der Pfropfmischpolymerisation sind so zu wählen, daß Teilchengrößen von 60 bis 1000 nm ($d_{50}$-Wert d. integralen Massenverteilung) resultieren. Maßnahmen hierzu sind bekannt und z.B. in der DE-PS 12 60 135 und der DE-OS 28 26 925 beschrieben.

Komponente C

Bevorzugte halogenfreie Copolymerisate C sind solche aus wenigstens einem Monomeren aus der Reihe Styrol, $\alpha$-Methylstyrol, Alkylstyrol, Methylmethacrylat mit wenigstens einem Monomeren aus der Reihe Acrylnitril, Methacrylnitril, Methylmethacrylat, Maleinsäureanhydrid.

Die Copolymerisate C sind harzartig, thermoplastisch und kautschukfrei und werden auch in diesem Zusammenhang als Matrix bezeichnet. Besonders bevorzugte Copolymerisate C sind solche aus Styrol, Acrylnitril und gegebenenfalls Methylmethacrylat, aus $\alpha$-Methylstyrol, Acrylnitril und gegebenenfalls Methylmethacrylat oder aus Styrol, $\alpha$-Methylstyrol, Acrylnitril und gegebenenfalls Methylmethacrylat und aus Styrol und Maleinsäureanhydrid.

Die erfindungsgemäß geeigneten halogenfreien Phosphorverbindungen D sind ebenfalls bekannt (beispielsweise aus Ullmann, Enzyklopädie der technischen Chemie, Bd. 12/1, S. 43, S. 136; Beilstein, Bd. 6, S. 177).

Erfindungsgemäß geeignete Phosphorverbindungen D, sind beispielsweise Tri-(2,6-dimethylphenyl)-phosphat, Triphenylphosphat, Trikresylphosphat, Diphenyl-2-ethyl-kresylphosphat, Diphenyl-kresylphosphat, Tri-(isopropylphenyl)-phosphats.

Um eine erhöhte Vicat-Temperatur in den Mischungen einzustellen, können auch Mischungen der oben genannten Phosphate mit z.B. Triphenylphosphinoxid oder Tri-(2,6-dimethylphenyl)-phosphinoxid eingesetzt werden. Weiterhin geeignet in diesem Sinne sind die in der DE-OS 38 24 356 genannten Phosphate wie z.B. Phosphorsäure-bis-phenyl-(4-phenylphenyl)-ester Phosphorsäure-phenyl-bis-(4-phenylphenyl)-ester Phosphorsäure-tris-(4-phenylphenyl)-ester Phosphorsäure-bis-phenyl-(benzylphenyl)-ester Phosphorsäure-phenyl-bis-(benzylphenyl)-ester Phosphorsäure-tris-(benzylphenyl)-ester Phosphorsäure-phenyl-bis-[4-(1-phenylethyl)-phenyl]-ester Phosphorsäure-phenyl-bis-[4-(1-methyl-1-phenylethyl)-phenyl]-ester und Phosphorsäure-phenyl-bis-[4-(phenylethyl)-2,6-dimethylphenyl]-ester.

Erfindungsgemäß geeignete Tetrafluorethylenpolymerisate E sind Polymere mit einem Fluorgehalt von 65 bis 76 Gew.-% vorzugsweise 70 bis 76 Gew.-%. Beispiele sind u.a. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen im wäßrigen Medium mit einem freien Radikale bildenden Initiator, beispielsweise Natrium-, Kalium- oder Ammoniumperoxidisulfat bei überatmosphärischem Druck und bis zu 200°C, (Einzelheiten sind beispielsweise in der US-PS 2 393 967 beschrieben).

Erfindungsgemäß geeignete Polytetrafluorethylene haben z.B. eine mittlere Teilchengröße von 0,05 bis 20 $\mu$m, vorzugsweise 0,08 bis 10 $\mu$m und eine Dichte von 1,2 bis 1,9 g/cm$^3$. Durch Zusatz von Tetrafluorethylenpolymerisaten wird in bekannter Weise insbesondere das Abtropfen der Formmassen während des Brandvorgangs reduziert oder ganz verhindert.

Die wäßrige Dispersion des PTFE-Polymeren kann entweder auf das Granulat im Fluidmischer aufgezogen werden, oder in die Schmelze der Komponente C in einem Extruder mit Entgasung eingebracht

werden. Weiterhin können auch Emulsionen der Komponente B mit Emulsionen der Komponente F vereinigt und mittels Salzlösung gefällt werden.

Die Formmasse kann weiterhin übliche Zusatzstoffe F enthalten. Genannt seien z.B. insbesondere Kohlenstoff-Fasern oder Glasfasern.

Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 mm. Es können sowohl Endlosfasern (rovings) als auch Schnittglasfasern mit einer Länge von 1 bis 10 mm, vorzugsweise 3 bis 6 mm, eingesetzt werden.

Andere geeignete Zusatzstoffe sind beispielsweise Füll- oder Verstärkungsstoffe, wie Glaskugeln, Mineralfasern, Whisker, Aluminiumoxidfasern, Glimmer, Quarzmehl, Wollastonit etc; zur Erzielung einer Abschirmwirkung gegenüber elektromagnetischer Strahlung werden z.B. Metallflocken (z.B. Aluminiumflokken), Metallpulver, Metallfasern, metallbeschichtete Füllstoffe (z.B. nickelbeschichtete Glasfasern) und ähnliche Zuschlagstoffe verwendet.

Die erfindungsgemäße Formmasse kann ferner Zusatzstoffe enthalten, die für Polycarbonate, SAN-Polymerisate und Pfropfmischpolymerisate auf Basis von ASA oder ABS, oder deren Mischungen typisch und gebräuchlich sind. Solche Zusatzstoffe sind beispielsweise Farbstoffe, Pigmente, Antistatika, Antioxidantien und insbesondere Schmiermittel, die für die Weiterverarbeitung der Formmasse, z.B. bei der Herstellung von Formkörpern bzw. Formteilen erforderlich sein können.

Zusatzstoffe außerhalb der erfindungsgemäßen Zusammensetzung (Komponente F) können in Mengen bis zu 80 Teilen, bezogen auf 100 Teile der Summe der Komponenten A bis E, der Mischung zugesetzt sein.

Hierbei werden Verarbeitungshilfsmittel und Stabilisatoren üblicherweise in Mengen von unter 2 % verwendet.

Verstärkungsmittel wie Glasfasern, C-Fasern etc. werden üblicherweise in Mengen von mehr als 5 % bis 80 %, bezogen auf die Summe von A bis E, zugesetzt.

Herstellung der Formmasse

Zur Herstellung der erfindungsgemäßen Formmasse werden die Bestandteile gemischt. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A bis E sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A, B, C, D, E und gegebenenfalls F kann nach allen bekannten Methoden erfolgen. Vorzugsweise geschieht jedoch das Mischen bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponente B) können zusammen mit der Komponente E koaguliert, gefällt und teilweise entwässert oder direkt als Dispersionen mit der Komponente C und dann mit dem Polycarbonat A und der Komponente D, vermischt werden, wobei dann während des Vermischens die vollständige Trocknung der Komponenten B und E erfolgt. Außerdem kann die Emulsion der Komponente E unter Entgasung in einem Extruder in eine Schmelze der Komponente C eingezogen werden und im selben Extruder nach der Entgasung die weiteren Komponenten A, B und D zudosiert werden.

Geeignete Mischaggregate für die Durchführung des erfindungsgemäßen Verfahrens sind beispielsweise übliche Taumelmischer oder Rührwerksmischer.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden Schnecken, Zweiwellenextruder sowie Mischwalzwerke mit beheizten Walzen.

Geeignete Aggregate für die Schmelzextrusion sind beispielsweise Ein- und Zweiwellenextruder.

Die erfindungsgemäße Formmasse kann nach den bekannten Verfahren der Thermoplastverarbeitung bearbeitet werden, also z . B. durch Extrudieren, Spritzgießen, Kalandrieren, Hohlkörperblasen, Pressen oder Sintern: besonders bevorzugt werden aus den nach dem erfindungsgemäßen Verfahren hergestellte Formmassen Formteile durch Spritzgießen für den Automobilbau, den Bausektor, für Büromaschinen, elektrische Geräte und Haushaltsgeräte hergestellt.

Die in der vorliegenden Anmeldung beschriebenen Parameter werden wie folgt bestimmt:

- Die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.-% der Teilchen einen kleineren Durchmesser haben als der Durchmesser, der dem $d_{50}$-Wert entspricht. Ebenso haben dann 50 Gew.-% der Teilchen einen größeren Durchmesser als der $d_{50}$-Wert. Zur Charakterisierung der Breite der Teilchengrößenverteilung der Kautschukteilchen werden neben dem $d_{50}$-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem $d_{50}$-Wert definiert mit dem Unterschied, daß sie auf 10 bzw. 90 Gew.-% der Teilchen bezogen sind. Der Quotient

$$\frac{d_{90} - d_{10}}{d_{50}} = Q$$

stellt ein Maß für die Verteilungsbreite der Teilchengröße dar.
- Der Schmelzindex MFI in g/10 min wurde nach DIN 53735 bei einer Temperatur von 260 °C und einer Belastung von 5 kg bestimmt.
- Die Wärmeformbeständigkeit (Vicattest) B/50 wurde an Stäben der Abmessung 50 x 6 x 4 mm nach DIN 53 460 bestimmt.
- Die relative Lösungsviskosität $\eta_{rel}$, des eingesetzten Polycarbonats wurde in einer 0,5 %igen Lösung in Methylenchlorid bei 230 °C gemessen.
- Die Viskositätszahl, VZ, der Copolymerisate C wurde in 0,5 %iger Lösung in Dimethylformamid bei 23°C bestimmt.
- Die Flammschutzprüfung erfolgte im vertikalen Brandtest nach den Vorschriften der Underwriter Laboratories zwecks Einordnung in eine der Brandklassen UL 94 V-0, V-1 oder V-2.

  Die Einstufung eines flammgeschützten Thermoplasten in die Brandklasse V-O erfolgt, wenn folgende Kriterien erfüllt sind: Bei einem Satz von 5 Proben der Abmessungen 127 x 12,7 x 1,7 mm dürfen alle Proben nach zweimaliger Beflammung von 10 Sekunden Zeitdauer mit einer offenen Flamme (Höhe 19 mm) nicht länger als 10 Sekunden nachbrennen. Die Summe der Nachbrennzeiten bei 10 Beflammungen von 5 Proben darf nicht größer als 50 Sekunden sein. Es darf kein brennendes Abtropfen, vollständiges Abbrennen oder ein Nachglühen von länger als 30 Sekunden erfolgen. Die Einstufung in die Brandklasse UL 94 V-1 erfordert, daß die Nachbrennzeiten nicht länger als 30 Sekunden sind und daß die Summe der Nachbrennzeiten von 10 Beflammungen der 5 Proben nicht größer als 250 Sekunden ist. Das Nachglühen darf nicht länger als 60 Sekunden dauern. Die übrigen Kriterien sind identisch mit den oben erwähnten. Die Einstufung in die Brandklasse V-2 erfolgt dann, wenn bei Erfüllung der übrigen Kriterien zur Einstufung UL 94 V-1 zu brennendem Abtropfen kommt.

Für die Herstellung erfindungsgemäßer Formmassen und Massen für Vergleichsversuche wurden die nachfolgend beschriebenen Produkte verwendet.

Als Phosphorverbindung B12 wurde das unter der Handelsbezeichnung MR 260 von der Firma Daihachi Inc. erhältliche Produkt der Formel Ia

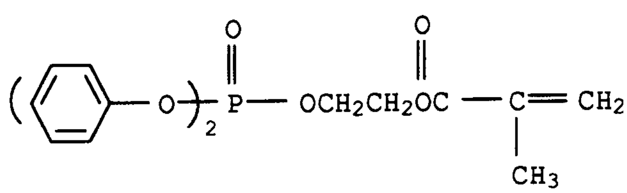

Ia

verwendet.

Komponente A

Als Komponente A wurde ein handelsübliches Polycarbonat auf Basis von Bisphenol A mit einer relativen Lösungsviskosität von 1,30 eingesetzt.

Komponente B

Als Produkt B-1 wurde zu Vergleichszwecken ein Pfropfmischpolymerisat ohne polymerisierbares Phosphat wie folgt hergestellt:

Zu einer Vorlage aus 1,5 Teilen eines Polybutylacrylat-Latex ließ man nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zulaufen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt. Die Teilchengrößenverteilung war eng (Q = 0,1).

150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

Als Produkt B-2 wurde folgendes Pfropfmischpolymerisat hergestellt:

Zu einer Vorlage aus 1,5 Teilen eines Polybutylacrylat-Latex wurden nach Zugabe von 50 Teilen Wasser und 0,1 Teilen Kaliumpersulfat im Verlauf von 3 Stunden einerseits eine Mischung aus 43 Teilen Butylacrylat, 6 Teilen polymerisierbares Phosphat der allgemeinen Formel Ia und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt. Die Teilchengrößenverteilung war eng (Q = 0,1).

150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 500 nm.

Als Produkt B-3 wurde folgendes Pfropfmischpolymerisat hergestellt:

Zu einer Vorlage aus 1,5 Teilen eines Polybutylacrylats wurden nach Zugabe von 50 Teilen Wasser und 0,1 Teilen Kaliumpersulfat im Verlauf von 3 Stunden einerseits eine Mischung aus 37 Teilen Butylacrylat, 12 Teilen polymerisierbares Phosphat der allgemeinen Formel (Ia) und 1 Teil Tricyclodecenylacrylat und andererseits eine Lösung von 0,5 Teilen des Natriumsalzes einer $C_{12}$-$C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Feststoffgehalt von 40 %. Die mittlere Teilchengröße (Gewichtsmittel des Latex) wurde zu 430 nm ermittelt. Die Teilchengrößenverteilung war eng (Q = 0,1).

150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylperoxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 500 nm.

Komponente C

Durch kontinuierliche Lösungspolymerisation nach einem Verfahren, wie es beispielsweise im Kunststoff-Handbuch, Vieweg-Daumiller, Band V (Polystyrol), Carl-Hanser-Verlag, München 1969, Seite 124, Zeilen 12ff, beschrieben ist, wurde folgendes Copolymerisat hergestellt:
Poly(styrol-co-acrylnitril), PSAN mit einem S/AN-Verhältnis von 81:19 Gew.-% und einer VZ = 100 ml/g

Komponente D: Triphenylphosphat

Komponente E: PTFE-Dispersion mit einem Feststoffgehalt von 60 Gew.-% und einer Teilchengröße von 230 nm (DuPont, Typ 30 N). Die Dichte des gesinterten Feststoffs ist 2,3 $g/cm^3$.

Tabelle:

| | 1 | 2 | 3 | 4 | 5 | 6 | 7 | 8 | 9 | 10 |
|---|---|---|---|---|---|---|---|---|---|---|
| A | 64,65 | 64,65 | 64,65 | 64,65 | 64,65 | 64,65 | 64,65 | 64,65 | 64,65 | 64,65 |
| B1 | 8 | 8 | - | - | - | - | 8 | - | 8 | - |
| B2 | - | - | 8 | 8 | 8 | 8 | - | - | - | - |
| B3 | - | - | - | - | - | - | 8 | 8 | 8 | 8 |
| C | 15 | 16 | 15 | 16 | 17 | 18 | 15 | 16 | 17 | 18 |
| D | 12 | 11 | 12 | 11 | 10 | 9 | 12 | 11 | 10 | 9 |
| E | 0,35 | 0,35 | 0,35 | 0,35 | 0,35 | 0,35 | 0,35 | 0,35 | 0,35 | 0,35 |
| MFI | 59 | 53 | 121 | 109 | 90 | 78 | 170 | 152 | 137 | 107 |
| Vicat | 86,2 | 90,5 | 84,7 | 87,8 | 91,1 | 94,6 | 83,5 | 85,7 | 89,3 | 92,4 |
| UL 94 | V-0 | V-1 | V-0 | V-0 | V-1 | V-1 | V-0 | V-0 | V-0 | V-2 |

## Patentansprüche

**1.** Formmasse, enthaltend, bezogen auf die Summe von A bis E,

A: mindestens 40 Gew.-% mindestens eines halogenfreien Polycarbonats A

B: 5-40 Gew.-% mindestens eines halogenfreien Pfropfpolymerisats B, aufgebaut aus, bezogen auf B,

B1: 40-80 Gew.-% eines Elastomeren B1 mit einer Glastemperatur von unter 0 °C, aus, bezogen auf B1,

B11: mindestens 50 Gew.-% eines Diens oder mindestens 4 C-Atome im Alkoholteil aufweisenden Acrylesters (B11)

B12: 1-40 Gew.-% einer halogenfreien Phosphorverbindung B12 der nachstehenden allgemeinen Formel (I)

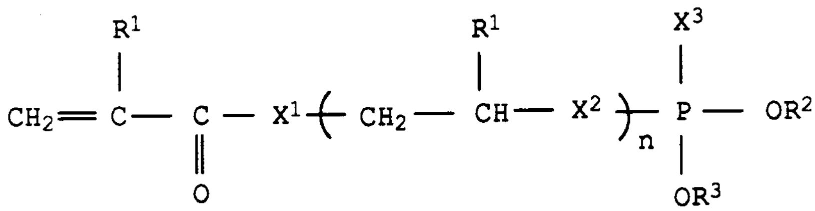

(I)

in der bedeutet:

$R^1$ = H oder $CH_3$

$R^2$, $R^3$ = jeweils unabhängig halogenfreies $C_1$-$C_8$-Alkyl oder halogenfreies, ggf. halogenfrei substituiertes $C_6$-$C_{20}$-Aryl

$X^1$, $X^2$, $X^3$ = O, S, NR (wobei R Wasserstoff oder halogenfreies $C_1$-$C_8$-Alkyl bedeutet) und

n = 0 bis 10,

B13: gegebenenfalls bis zu 5 Gew.-% eines vernetzenden weiteren Monomeren

B2: 20-60 Gew.-% einer Pfropfhülle B2 aus, bezogen auf B2,

B21: 40-98 Gew.-% Styrol, $\alpha$-Alkylstyrol, kernsubstituiertem Styrol und/oder $C_1$-$C_8$-Alkyl(meth)acrylat,

B22: 2-60 Gew.-% (Meth)acrylnitril und/oder Maleinsäureanhydrid, sowie

C: 5-40 Gew.-% eines halogenfreien thermoplastischen Copolymerisats C aus, bezogen auf C,

C1: 50 bis 95 Gew.-% Styrol, eines $\alpha$-Alkylstyrols, kernsubstituierten Styrols und/oder $C_1$-$C_8$-(Meth)acrylats (C1),

C2: 5 bis 50 Gew.-% (Meth)acrylnitril, $C_1$-$C_8$-Alkyl(meth)acrylat und/oder Maleinsäureanhydrid (C2),

D: 1 bis 50 Gew.-% einer halogenfreien Phosphorverbindung D der Formel (II)

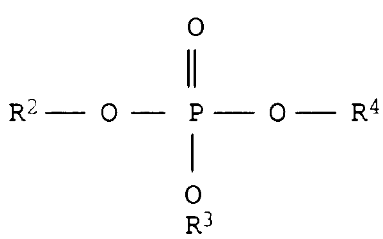

(II)

in der $R^2$, $R^3$, $R^4$ jeweils unabhängig die obenstehende Bedeutung von $R^2$ und $R^3$ haben,

E: bis 5 Gew.-% eines Tetrafluorethylen-Polymerisats mit einer mittleren Teilchengröße von 50 bis 2000 nm.